# EUROPEAN PATENT APPLICATION

(11) **EP 4 427 569 A1**
(43) Date of publication of application: **11.09.2024**
(21) Application number: 22886178.7
(22) Date of filing: 01.11.2022
(51) Int. Cl.: A01D 34/00, G05D 1/02

(54) **AUTOMATIC LAWN MOWER**

(30) Priority: 01.11.2021 CN 202111284425
(71) Applicant: Positec Power Tools (Suzhou) Co., Ltd., Suzhou, Jiangsu 215123 (CN)
(72) Inventor: REN, Zhiguo, Suzhou, Jiangsu 215123 (CN); DU, Jiang, Suzhou, Jiangsu 215123 (CN); LAN, Bincai, Suzhou, Jiangsu 215123 (CN); ZHA, Xiahong, Suzhou, Jiangsu 215123 (CN); LI, Xinghong, Suzhou, Jiangsu 215123 (CN); YIN, Dong, Suzhou, Jiangsu 215123 (CN); XU, Chunpeng, Suzhou, Jiangsu 215123 (CN); SHENG, Xiaochu, Suzhou, Jiangsu 215123 (CN)
(74) Representative: Kilburn & Strode LLP
(86) International application number: PCT/CN2022/129100
(87) International publication number: WO 2023/072303

(57) **Abstract**

The present invention relates to an automatic lawn mower, including: a frame body; a movement module; a cutting module; a controller, configured to control the movement module to drive the automatic lawn mower to move, and control the cutting module to perform a cutting task; and a plurality of sensors, configured to detect an obstacle in an environment, where the plurality of sensors include: a plurality of first sensors, where the first sensors are arranged around the frame body in a manner in which a detection direction thereof is inclined upward by a first preset angle relative to a horizontal reference plane; and a second sensor, arranged in a manner in which a detection direction thereof is toward a front end of the frame body and is inclined downward by a second preset angle relative to the horizontal reference plane, where poses of the first sensors and the second sensor are combined, so that a sum of detection ranges of the plurality of sensors covers all angles in a direction parallel to the horizontal reference plane. In the present invention, the combination of the poses of the plurality of sensors allows the automatic lawn mower to promptly and accurately identify obstacles in all directions of a body of the automatic lawn mower, thereby avoiding the obstacles.

## Description

This application is a Continuation Application of PCT Application No.PCT/CN2022/129100, filed on November 1, 2022, which claims benefit of and priority to Chinese Patent Application No. 202111284425.6, filed on November 1, 2021, all of which are hereby incorporated by reference in their entirety for all purposes as if fully set forth herein.

### TECHNICAL FIELD

The present disclosure relates to the field of lawn mowers, and in particular, to an automatic lawn mower.

### BACKGROUND

Automatic lawn mowers are quite popular with consumers because they can autonomously move within a working region and perform lawn mowing, to free users from boring lawn mowing.

However, to autonomously move within a working region and perform lawn mowing, an automatic lawn mower needs to have both a capability of identifying the working region and a capability of identifying obstacles around the body of the automatic lawn mower. Particularly, in the field of commercial automatic lawn mowers, the automatic lawn mower travels faster due to requirements on cutting efficiency, and therefore, it is increasingly important for the automatic lawn mower to identify obstacles around the body of the automatic lawn mower in a timely and accurate manner.

Therefore, there is an urgent need in the industry for an automatic lawn mower that can resolve the foregoing problem.

### SUMMARY

To overcome defects in the related art, it is necessary to provide an automatic lawn mower having a wide wave detecting range and high safety performance.

An automatic lawn mower, including: a frame body; a movement module, arranged on the frame body; a cutting module, arranged on the frame body; a controller, configured to control the movement module to drive the automatic lawn mower to move, and control the cutting module to perform a cutting task; and a plurality of sensors, configured to detect an obstacle in an environment, where the plurality of sensors include: a plurality of first sensors, where the first sensors are arranged around the frame body in a manner in which a detection direction thereof is inclined upward by a first preset angle relative to a horizontal reference plane; and a second sensor, arranged in a manner in which a detection direction thereof is toward a front end of the frame body and is inclined downward by a second preset angle relative to the horizontal reference plane, where poses of the first sensors and the second sensor are combined, so that a sum of detection ranges of the plurality of sensors covers all angles in a direction parallel to the horizontal reference plane.

In an implementation, poses of the first sensors are combined in all directions around a body of the automatic lawn mower, so that detection ranges of adjacent first sensors at least partially overlap; and the poses of the first sensors and the second sensor are combined in a moving direction of the automatic lawn mower, so that detection ranges of the first sensors at least partially overlap a detection range of the second sensor.

In an implementation, the poses of the first sensors and the second sensor are combined in a moving direction of the automatic lawn mower, so that detection ranges of the first sensors at least partially do not overlap a detection range of the second sensor, where when the detection ranges are at least partially non-overlapping, a wider detection range of the sensors is achieved.

In an implementation, in a first detection range of the plurality of sensors that is obtained in the moving direction of the automatic lawn mower based on the combination of the poses of the first sensors and the pose the second sensor, a detection distance of the first sensors in the direction parallel to the horizontal reference plane is less than a detection distance of the second sensor in the direction parallel to the horizontal reference plane, and a detection height of the first sensors in a direction perpendicular to the horizontal reference plane is less than a detection height of the second sensor in the direction perpendicular to the horizontal reference plane.

In an implementation, the detection distance of the first sensors in the direction parallel to the horizontal reference plane at least includes a range of 0.2 m to 0.8 m, and the detection distance of the second sensor in the direction parallel to the horizontal reference plane at least includes a range of 0.4 m to 6 m.

In an implementation, in the first detection range, the detection height of the first sensors in the direction perpendicular to the horizontal reference plane is less than or equal to the detection height of the second sensor in the direction perpendicular to the horizontal reference plane when the first sensors and the second sensor are at the same distance from the front end of the frame body.

In an implementation, in the first detection range, the second sensor is configured to detect an obstacle having a height of not less than 0.145 m at a distance of 0.8 m from the front end of the frame body; the second sensor is configured to detect an obstacle having a height of not less than 0.35 m at a distance of 1.3 m from the front end of the frame body; and the second sensor is configured to detect an obstacle having a height of not less than 1.5 m at a distance of 2.5 m from the front end of the frame body.

In an implementation, in the first detection range, the first sensors are configured to detect an obstacle having a height of not less than a first preset value at a distance of 0.8 m from the front end of the frame body, and are not configured to detect an obstacle having a height of not greater than a second preset value at a distance of 0.8 m from the front end of the frame body, where the second preset value is less than the first preset value.

In an implementation, in a moving direction of the automatic lawn mower, a distance between the front end of the frame body and an intersection between a detection range of the second sensor and the horizontal reference plane is not greater than a detection distance of the first sensors in the direction parallel to the horizontal reference plane.

In an implementation, a horizontal distance between the second sensor and the front end of the frame body is greater than a horizontal distance between each of the first sensors and the front end of the frame body.

In an implementation, the plurality of sensors further include a third sensor, arranged in a manner in which a detection direction thereof is toward the front end of the frame body and is inclined downward by a third preset angle relative to the horizontal reference plane.

In an implementation, in a moving direction of the automatic lawn mower, poses of the first sensors, the second sensor, and the third sensor are combined, so that detection ranges of the first sensors and the second sensor and/or the third sensor at least partially overlap.

In an implementation, in a moving direction of the automatic lawn mower, poses of the first sensors, the second sensor, and the third sensor are combined, so that detection ranges of the first sensors and the second sensor and/or the third sensor at least partially do not overlap, where when the detection ranges are at least partially non-overlapping, a wider detection range of the sensors is achieved.

In an implementation, in a second detection range that is obtained in the moving direction of the automatic lawn mower based on the combination of the poses of the first sensors, the pose of the second sensor, and the pose of the third sensor, a detection distance of the first sensors in the direction parallel to the horizontal reference plane is less than a detection distance of the second sensor and/or a detection distance of the third sensor in the direction parallel to the horizontal reference plane, and a detection height of the first sensors in a direction perpendicular to the horizontal reference plane is less than a detection height of the second sensor and/or a detection height of the third sensor in the direction perpendicular to the horizontal reference plane.

In an implementation, in the second detection range, the detection height of the second sensor in the direction perpendicular to the horizontal reference plane is less than or equal to the detection height of the third sensor in the direction perpendicular to the horizontal reference plane when the second sensor and the third sensor are at the same distance from the front end of the frame body.

In an implementation, in the second detection range, the third sensor is configured to detect an obstacle having a height of not less than 1.9 m at a distance of 2 m from the front end of the frame body; and the third sensor is configured to detect an obstacle having a height of not less than 0.81 m at a distance of 0.5 m from the front end of the frame body.

In an implementation, a horizontal distance between the third sensor and the front end of the frame body is less than a horizontal distance between the second sensor and the front end of the frame body.

In an implementation, in a moving direction of the automatic lawn mower, a distance between the front end of the frame body and an intersection between a detection range of the third sensor and the horizontal reference plane is not greater than a detection distance of the first sensors in the direction parallel to the horizontal reference plane.

In an implementation, the third sensor is configured to identify a type of the obstacle.

In an implementation, the first preset angle is in a range of 29° to 35°.

In an implementation, the second preset angle is in a range of -3° to 15°.

In an implementation, the third preset angle is in a range of -4° to 10°.

In an implementation, the first sensors are ultrasonic sensors, and the second sensor is a lidar.

In an implementation, the third sensor is a monocular camera, a multi-ocular camera, or a depth camera.

An automatic lawn mower includes: a housing; a movement module, mounted on the housing; a cutting module, mounted on the housing; and a controller, configured to control the movement module to drive the automatic lawn mower to move, and control the cutting module to perform a work task; The automatic lawn mower further includes a plurality of ultrasonic sensors arranged around the housing. The ultrasonic sensors are configured to detect an obstacle having a height at least greater than a preset height at a preset distance from the automatic lawn mower in a 360-degree range around the automatic lawn mower.

In an implementation, a detection distance of ultrasonic sensors at the front end of the machine is not less than a braking distance of the machine, where the braking distance is a distance at which the machine brakes to a complete stop during normal travel.

In an implementation, a detection angle of the ultrasonic sensors in a first direction parallel to a level ground is 85 degrees.

In an implementation, at the braking distance, a detection height of the ultrasonic sensors at the front end of the machine is not less than a preset height.

In an implementation, a detection angle of the ultrasonic sensor in a direction perpendicular to the level ground is 35 degrees.

In an implementation, a value of an angle of the ultrasonic sensors in the direction perpendicular to the level ground is adjusted, so that grass below the preset height or a part of the machine does not fall within detection ranges of the ultrasonic sensors.

In an implementation, the ultrasonic sensors are inclined upward away from the ground.

In an implementation, distances between the plurality of ultrasonic sensors and an edge of the housing of the automatic lawn mower are slightly greater than or equal to a dimension of detection blind zones of the plurality of ultrasonic sensors.

In an implementation, detection ranges of any two adjacent ultrasonic sensors at least partially overlap.

In an implementation, mounting parameters of the ultrasonic sensors are adjusted, so that a sum of areas of blind zones of all adjacent ultrasonic sensors is minimized, or there is at least one blind zone with a smallest area among the adjacent ultrasonic sensors, or areas of blind zones at four corners of the machine are minimized.

In an implementation, the mounting parameters include at least one of a mounting height, a mounting position, a mounting distance between adjacent ultrasonic sensors, or an angle. The angle includes at least an angle in a direction parallel to a horizontal direction.

In an implementation, the mounting height of the ultrasonic sensors is greater than or equal to 30 cm and less than or equal to 41 cm.

In an implementation, the mounting position includes a specific position of a frame inside the housing, where the specific position includes an unoccupied position on the frame or a position on a connecting shaft between the frame and a walking wheel.

In an implementation, the mounting distance between adjacent ultrasonic sensors is in a range of 130 mm to 470 mm.

In an implementation, for ultrasonic sensors not at corners, a mounting distance between adjacent ultrasonic sensors in a width direction of the machine is 130 m, and a mounting distance between adjacent ultrasonic sensors in a length direction of the machine is 470 mm; and for an ultrasonic sensor at a corner, a mounting distance between the ultrasonic sensor and an adjacent ultrasonic sensor is set to be in a range of 130 mm to 260 mm.

In an implementation, at least one ultrasonic sensor is symmetrically arranged on either side of a direction of forward motion of the machine, and at least one ultrasonic sensor is arranged at each of a front end and a rear end of the machine.

In an implementation, ultrasonic sensors arranged on front, rear, left, and right sides of the machine are not deflected in the direction parallel to the level ground.

In an implementation, the plurality of ultrasonic sensors include four ultrasonic sensors located at corners of the housing.

In an implementation, ultrasonic sensors located at two corners of the rear end of the machine are each deflected outward by 10 degrees to 15 degrees, and two ultrasonic sensors located at the front end of the machine are each deflected outward by 5 degrees to 10 degrees.

In an implementation, the plurality of ultrasonic sensors include four ultrasonic sensors located at corners of the housing, where ultrasonic sensors located at two corners of the rear end of the machine are each deflected outward by 12.5 degrees, and two ultrasonic sensors located at the front end of the machine are each deflected outward by 7.5 degrees.

In an implementation, the plurality of ultrasonic sensors are transceiver ultrasonic sensors.

In an implementation, there are 4 to 16 ultrasonic sensors.

In an implementation, there are 8 to 14 ultrasonic sensors.

In an implementation, the automatic lawn mower further includes a lidar, mounted on the housing and configured to detect an obstacle in the direction of forward motion of the machine.

In an implementation, a detection distance of the lidar is not less than a sum of the braking distance and a safety distance. The safety distance is a distance between an obstacle and an edge of a cutter head.

In an implementation, a detection blind zone of the lidar is close to a detection distance of the ultrasonic sensors, or detection ranges of the ultrasonic sensors at the front end of the machine cover a detection blind zone of the lidar in some embodiments.

In an implementation, the lidar is mounted above the edge of the cutter head of the machine.

In an implementation, a mounting height of the lidar is a minimum of 0.25 m and a maximum of 0.68 m.

In an implementation, the lidar is arranged toward the ground, and a mounting angle of the lidar is set to a minimum of 7.3 degrees and a maximum of 20.8 degrees. the mounting angle of the lidar is an included angle between an axis of the lidar and a horizontal line. The mounting angle of the lidar is related to an assembly process angle with an angular error greater than or equal to ± 2°.

In an implementation, the mounting angle of the lidar is set to 15.3 degrees.

In an implementation, the automatic lawn mower further includes a depth camera, mounted on the housing and configured to capture an image in the direction of forward motion of the machine.

In an implementation, the depth camera is further configured to identify an obstacle in the image.

In an implementation, detection ranges of ultrasonic sensors arranged in a direction of forward motion of the housing at least partially cover a detection blind zone of the depth camera.

In an implementation, when the depth camera is configured at a first distance from the front end of the machine, the depth camera needs to have a field of view covering at least an obstacle having a height of a first height.

In an implementation, the depth camera is further configured to identify at a second distance from the front end of the machine, where the field of view of the depth camera covers at least an obstacle having a height of a second height. The second distance is greater than the first distance.

In an implementation, a vertical viewing angle of the depth camera is set to be in a range of 50 degrees to 65 degrees, and a horizontal viewing angle is set to be in a range of 80 degrees to 95 degrees.

In an implementation, a height between the depth camera and the level ground is in a range of 0.5 m to 0.7 m.

In an implementation, a mounting height of the depth camera is 0.65 m.

In an implementation, the depth camera is arranged toward the ground, and a mounting angle of the depth camera is inclined by 12 degrees to 25 degrees relative to the horizontal line in a vertical direction.

In an implementation, the mounting height of the depth camera is 12 degrees.

In an implementation, the depth camera is mounted in-line in the housing.

In an implementation, the depth camera is a trinocular stereo camera.

In this application, a plurality of different types of sensors are arranged on the machine, so that bounded detection volumes of the sensors are complementary, and the machine identifies people or objects in all directions within the safety distance. In this way, the lawn mower in a high-speed operation state achieves timely and efficient detection on people or objects in all directions, and safety specifications of the lawn mower are met.

### BRIEF DESCRIPTION OF THE DRAWINGS

The accompanying drawings constituting a part of this application are used to provide further understanding of the present disclosure. Exemplary embodiments of the present disclosure and descriptions of the embodiments are used to describe the present disclosure, and do not constitute any inappropriate limitation to the present disclosure.

To describe the technical solutions in the embodiments of the present disclosure more clearly, the following briefly describes the accompanying drawings required for describing the embodiments. Apparently, the accompanying drawings in the following description show merely some embodiments of the present disclosure, and a person of ordinary skill in the art may still derive other drawings from these accompanying drawings without creative efforts.
FIG. 1 is a schematic top view of an automatic lawn mower according to an embodiment of the present disclosure;
FIG. 2 is a schematic side view of an automatic lawn mower according to an embodiment of the present disclosure;
FIG. 3 is a schematic front view of an automatic lawn mower according to an embodiment of the present disclosure;
FIG. 4 shows detection ranges of ultrasonic sensors shown in FIG. 1 in a direction parallel to a horizontal reference plane;
FIG. 5 is a schematic diagram of another automatic lawn mower according to an embodiment of the present disclosure;
FIG. 6 is a schematic diagram of another automatic lawn mower according to still another embodiment of the present disclosure;
FIG. 7 is a schematic diagram of another automatic lawn mower according to yet another embodiment of the present disclosure;
FIG. 8 is a schematic side view of another automatic lawn mower according to an embodiment of the present disclosure;
FIG. 9 is a schematic top view of another automatic lawn mower according to an embodiment of the present disclosure;
FIG. 10 is a schematic top view of another automatic lawn mower according to an embodiment of the present disclosure; and
FIG. 11 is a schematic side view of another automatic lawn mower according to an embodiment of the present disclosure.

### DETAILED DESCRIPTION

The following describes preferred embodiments of the present disclosure in detail with reference to the accompanying drawings, so that the advantages and features of the present disclosure can be more easily understood by a person skilled in the art, thereby defining the protection scope of the present disclosure more clearly and explicitly. The following implementations can be appropriately combined with each other. The same reference numerals and symbols in the accompanying drawings and different embodiments in this specification are used to denote the same or equivalent elements.

In the context of the present disclosure, as understood by a person skilled in the art, an ultrasonic wave is a sound wave whose frequency is higher than 20 KHz.

In an embodiment of the present disclosure, an automatic lawn mower is provided, including: a housing, a movement module, a cutting module, and a controller. The movement module and the cutting module are electrically connected to the controller respectively.

The movement module is mounted on the housing and is configured to drive the automatic lawn mower to move, for example, drive the automatic lawn mower to walk in a working region.

Specifically, the movement module includes walking wheels and a drive motor that drives the walking wheels to walk, and an output end of the drive motor is connected to the walking wheels.

The cutting module is mounted on the housing and is configured to perform a lawn mowing task in the working region, for example, cut grass on a lawn to be mowed.

Specifically, the cutting module includes a cutter head and a cutting motor that drives the cutter head to rotate. At least one blade is arranged on each cutter head. The cutter head is driven by the cutting motor to rotate, to drive the blade to cut grass.

Further, the automatic lawn mower further includes a protective mechanism for protecting the cutter head. The protective mechanism is, for example, a protection cover in some embodiments.

Further, the automatic lawn mower further includes a height adjustment mechanism for adjusting a height of the cutter head, to adjust the cutter head to different heights, thereby obtaining different grass heights.

The controller is mounted in the housing and is configured to control the movement module to drive the automatic lawn mower to move, and control the cutting module to perform a cutting task.

Further, the automatic lawn mower further includes a plurality of ultrasonic sensors. The ultrasonic sensors are arranged in the housing and are configured to detect an obstacle having a height at least greater than a preset height at a preset distance from the automatic lawn mower in a 360-degree range around the automatic lawn mower.

The preset distance is related to a braking distance of the machine. The braking distance of the machine is a distance at which the machine brakes to a complete stop during travel. The braking distance is related to a travel speed of the machine. Further, the braking distance is determined based on the travel speed of the machine and braking acceleration in some embodiments.

Certainly, in other embodiments, in addition to the braking distance, the preset distance is also related to a safety distance. The safety distance is a distance between an obstacle and an edge of the cutter head. For example, the safety distance is usually set based on a distance at which a person can reach the edge of the cutter head or the blade when reaching out. The safety distance is usually set to 0.5 meters (m).

In an implementation, for example, the travel speed is 2 m/s. In this case, the braking distance of the machine is approximately 0.8 m.

It is to be noted that, the preset height is related to a type (e.g. a child or adult) and/or a state (e.g. kneeling or standing) of the obstacle.

In this embodiment, the ultrasonic sensors are configured to detect a child that has a height at least greater than 0.81 m and that is located at a distance of 0.8 m from the automatic lawn mower in the 360-degree range around the automatic lawn mower, to avoid injury to the child.

Layouts of the ultrasonic sensors are described in detail below.

Mounting parameters of the ultrasonic sensors are configured to be first parameters, so that a detection distance (also referred to as a detection length) of the ultrasonic sensors is not less than the braking distance, and particularly, a detection distance of ultrasonic sensors at a front end of the machine is not less than the braking distance.

For the ultrasonic sensors, transmitted signals and residual vibration signals of the ultrasonic sensors cause coverage or interference with an echo signal, and therefore, a detection function is lost when the detection distance is less than a distance. The detection distance is a maximum distance at which the ultrasonic sensors have the detection function.

In addition, considering that if people or animals exist on left and right sides of the machine during forward motion, because ultrasonic sensors are arranged on two sides of a body and have the detection distance, it is to be understood that the detection distance is a detection distance in a direction extending outward (perpendicular to a direction of a paper surface) from the two sides in some embodiments. Therefore, the ultrasonic sensors on the two sides of the body can sense and judge in advance to avoid an obstacle, to further avoid injury during turning.

In an implementation, the detection distance of the ultrasonic sensors arranged at the front end of the machine in a first direction parallel to a level ground, especially in a direction of forward motion of the machine is not less than the braking distance of the machine. It is to be understood that, the first direction is parallel to the level ground.

Further, a detection angle of the ultrasonic sensors in the first direction parallel to the level ground is 85 degrees.

Considering that obstacles generally have a height, the mounting parameters of the ultrasonic sensors are configured to be the first parameters. This further makes a detection height of the ultrasonic sensors not less than a preset height.

In an implementation, the detection height of the ultrasonic sensors in a second direction perpendicular to the level ground, especially in a direction perpendicular to the direction of forward motion of the machine is not less than the preset height. It is to be understood that, the second direction is perpendicular to both the level ground and the direction of forward motion.

Further, to cover an obstacle with the preset height, a detection region of the ultrasonic sensors in a direction perpendicular to the level ground is an arc region or a sector region, and a detection angle of the ultrasonic sensors in the second direction perpendicular to the level ground is 35 degrees.

Considering that grass has a height when the automatic lawn mower cuts grass in the working region, to avoid the influence of the grass height on a detection result, the mounting parameters of the ultrasonic sensors are configured to be the first parameters. This further prevents grass below a preset grass height from interfering with the ultrasonic sensors, or enables the automatic lawn mower to meet a capability of performing an operation on grass with the preset grass height. It is to be understood that, the two preset heights are the same or different in some embodiments.

In addition, because the machine has a plurality of types of components, the mounting parameters of the ultrasonic sensors are configured to be the first parameters to eliminate adverse effects of the components on the ultrasonic sensors. This further prevents the ultrasonic sensors from being blocked by the other components of the automatic lawn mower, that is, prevents the other components from falling within detecting ranges of the ultrasonic sensors.

Further, the mounting parameters of the ultrasonic sensors include a mounting angle. The mounting angle is set to be inclined by a preset angle relative to a horizontal direction. This enables the ultrasonic sensors to prevent grass below the preset height from being identified, or enables the automatic lawn mower to meet the capability of performing an operation on grass with the preset height. The mounting angle is in a direction inclined upward and perpendicular to the level ground.

Considering that the ultrasonic sensors have respective detection blind zones, the mounting parameters of the ultrasonic sensors are configured to be the first parameters. This further enables the ultrasonic sensors to preclude the blind zones of the ultrasonic sensors.

Further, distances between the plurality of ultrasonic sensors and an edge of the housing of the automatic lawn mower are slightly greater than or equal to a dimension of detection blind zones of the plurality of ultrasonic sensors.

Further, the mounting parameters include a mounting height. A mounting height of each of the ultrasonic sensors is selected in a range greater than or equal to 30 cm and less than or equal to 41 cm. The mounting height is a height between the ultrasonic sensor and the level ground.

Further, detection ranges of any two adjacent ultrasonic sensors at least partially overlap.

The mounting parameters of the ultrasonic sensors are configured to be the first parameters. This further minimizes a sum of areas of blind zones of the ultrasonic sensors, or minimizes areas of blind zones of at least two adjacent ultrasonic sensors.

For example, the plurality of ultrasonic sensors are arranged around a frame in the housing and at specific positions on the frame at intervals, and the mounting parameters of the ultrasonic sensors are adjusted, so that the sum of areas of blind zones of adjacent ultrasonic sensors is minimized. The mounting parameters include at least one of a mounting height, a mounting position, a mounting distance between adjacent ultrasonic sensors, or an angle.

Alternatively, the plurality of ultrasonic sensors are arranged around a frame in the housing and at specific positions on the frame at intervals, so that an area of at least one of adjacent ultrasonic sensors is minimized. For example, angles of the ultrasonic sensors are adjusted, so that the area of the at least one of adjacent ultrasonic sensors is minimized. The angles include at least an angle in the direction parallel to the level ground.

Alternatively, the plurality of ultrasonic sensors are arranged around a frame in the housing and at specific positions on the frame at intervals, so that areas of blind zones at four corners of the machine are minimized. The specific positions include an unoccupied position on the frame or a position on a connecting shaft between the frame and the walking wheel. The specific positions further include a mounting height of each ultrasonic sensor and a distance between adjacent ultrasonic sensors. For example, the plurality of ultrasonic sensors are arranged around the frame in the housing and at the specific positions on the frame at intervals, and the angles of the ultrasonic sensors are adjusted, so that the areas of the blind zones at the four corners of the machine are minimized. The angles include at least an angle in the direction parallel to the level ground.

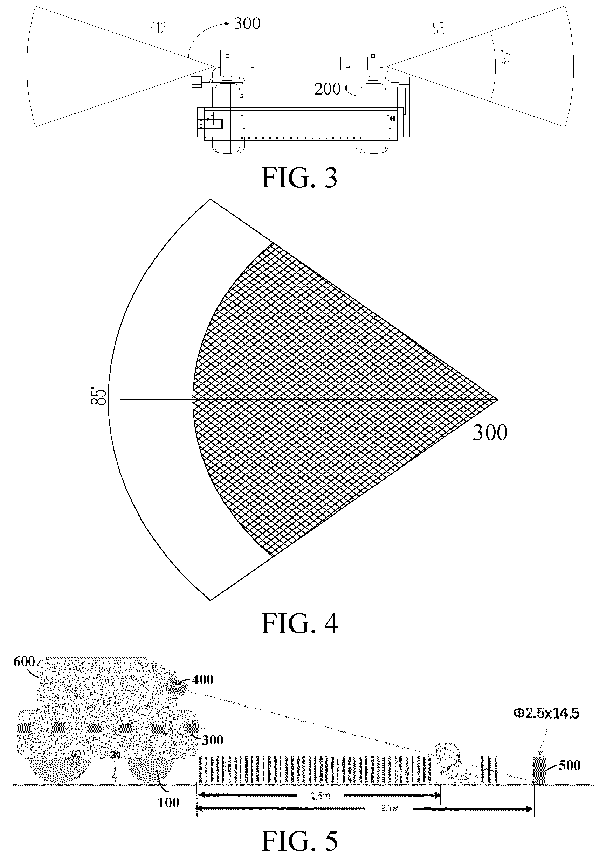

Further, as shown in FIG. 4, a detection angle of the ultrasonic sensors in the direction parallel to the level ground is 85 degrees.

Further, at least one ultrasonic sensor is symmetrically arranged on either side of a direction of forward motion of the machine, and at least one ultrasonic sensor is arranged at each of a front end and a rear end of the machine.

Further, the plurality of ultrasonic sensors include four ultrasonic sensors located at corners of the housing, where ultrasonic sensors located at two corners of the rear end of the machine are each deflected outward by 10 degrees to 15 degrees, and two ultrasonic sensors located at the front end of the machine are each deflected outward by 5 degrees to 10 degrees.

Furthermore, the plurality of ultrasonic sensors include four ultrasonic sensors located at corners of the housing, where ultrasonic sensors located at two corners of the rear end of the machine are each deflected outward by 12.5 degrees, and two ultrasonic sensors located at the front end of the machine are each deflected outward by 7.5 degrees.

Further, the plurality of ultrasonic sensors are transceiver ultrasonic sensors.

Further, there are 4 to 16 ultrasonic sensors.

A quantity of ultrasonic sensors is related to a size of the machine. Therefore, the quantity of ultrasonic sensors mounted is determined according to the size of the machine in some embodiments.

Furthermore, there are 8 to 14 ultrasonic sensors.

In an implementation, there are 14 ultrasonic sensors. This can ensure that a child having a height of 0.81 m at a distance of 0.8 m from the machine is detected in the 360-degree range.

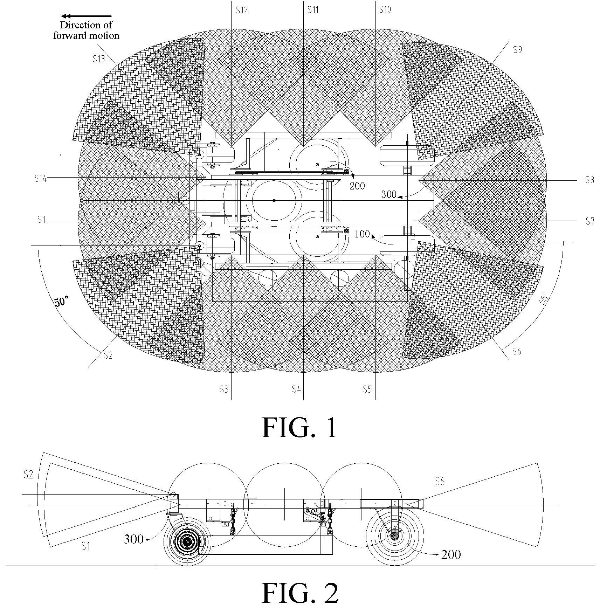

For ease of understanding, the automatic lawn mower provided in this embodiment is described in detail below with reference to FIG. 1 to FIG. 4.

Refer to FIG. 1 to FIG. 4. An orientation of the front end of the machine is used as the direction of forward motion. The automatic lawn mower includes four walking wheels 100 and three cutter heads 200. Each walking wheel includes two driven wheels and two following wheels. The driven wheels are arranged at the front end (head) of the machine or arranged at the rear end (tail) of the machine in some embodiments. Certainly, it is to be noted that, the four walking wheels are alternatively driven wheels in some other embodiments, which are respectively driven by the drive motor. In addition, the four walking wheels in the figure are merely for ease of understanding and should not be construed as a limitation on the present disclosure. A quantity of walking wheels is further set to three according to requirements in some embodiments, and a quantity of driven wheels and a quantity of following wheels are also adaptively adjusted according to requirements in some embodiments. This is not specifically limited in this embodiment.

The automatic lawn mower further includes 14 ultrasonic sensors 300, namely, S1, S2, S3, S4, S5, S6, S7, S8, S9, S10, S11, S12, S13, and S14. All the 14 ultrasonic sensors are arranged in a housing (not shown) of the machine.

A cross section (transverse section) of a detection range (also referred to as a detecting range) of each ultrasonic sensor in the direction parallel to the level ground is a first sector region (for example, shown in FIG. 1 and FIG. 4). The first sector region has an angle of 85 degrees, that is, a detection angle of the ultrasonic sensor in the direction parallel to the level ground is 85 degrees. A detection distance of each ultrasonic sensor is not less than a braking distance of 0.8 m at which the machine brakes to a complete stop when traveling at 2 m/s.

A cross section (longitudinal section) of a detection range of each ultrasonic sensor in the direction perpendicular to the level ground is a second sector area (for example, shown in FIG. 2 and FIG. 3). The second sector area has an angle of 35 degrees, that is, a detection angle of the ultrasonic sensor in the direction parallel to the level ground is 35 degrees. A detection height of each ultrasonic sensor at a braking distance of 0.8 m is not less than a preset height of 0.81 m.

Detection ranges of any two adjacent ultrasonic sensors of the 14 ultrasonic sensors at least partially overlap.

The 14 ultrasonic sensors are arranged around the machine, to achieve 360-degree detection performed by the machine.

A height between each of the 14 ultrasonic sensors and the ground is in a range of 30 cm to 40 cm.

The 14 ultrasonic sensors are transceiver ultrasonic sensors.

Specifically, two ultrasonic sensors S1 and S14 are arranged at the front end of the machine, two ultrasonic sensors S7 and S8 are arranged at the rear end of the machine, and three ultrasonic sensors S3, S4, and S5 and three ultrasonic sensors S10, S 11, and S12 are respectively arranged on two sides of the direction of forward motion of the machine. Four ultrasonic sensors S2, S13, S6, and S9 are arranged at four corners of the machine. The ultrasonic sensors S3, S4, and S5 and the ultrasonic sensors S10, S11, and S12 are symmetrically arranged by using a central axis of the machine parallel to the direction of forward motion as a symmetry axis. The ultrasonic sensors S2 and S13 are arranged at corners of a front end of the body, and the ultrasonic sensors S6 and S9 are arranged at corners of a rear end of the body. Due to the limitation of a mounting space inside the machine, the ultrasonic sensors S2 and S13 are arranged on the connecting shaft (refer to FIG. 2) between the frame and the walking wheel of the machine, and have a height of approximately 40 cm from the ground. The other ultrasonic sensors S1, S3, S4, S5, S6, S7, S8, S9, S10, S11, S12, and S14 are arranged at unoccupied positions on the frame, and have a height of approximately 35 cm from the ground.

During mounting of the ultrasonic sensors, it is also considered that the ultrasonic sensors have own detection blind zones. Therefore, during arrangement, the ultrasonic sensors are offset by a distance along a direction from the edge of the housing of the machine to a center of the machine, to avoid the detection blind zones of the ultrasonic sensors. In other words, distances between the ultrasonic sensors and an edge of the housing of the automatic lawn mower are slightly greater than or equal to a dimension of detection blind zones of the plurality of ultrasonic sensors.

Further, the plurality of ultrasonic sensors are arranged around the frame in the housing and at specific positions on the frame at intervals, and the mounting distance between adjacent ultrasonic sensors and a deflection angle parallel to the level ground are arranged, so that the sum of areas of blind zones of adjacent ultrasonic sensors is minimized.

Alternatively, the plurality of ultrasonic sensors are arranged around the frame in the housing and at specific positions on the frame at intervals, and the mounting distance between adjacent ultrasonic sensors and a deflection angle parallel to the level ground are arranged, so that an area of at least one of all adjacent ultrasonic sensors is minimized.

Alternatively, the plurality of ultrasonic sensors are arranged around the frame in the housing and at specific positions on the frame at intervals, and the mounting distance between adjacent ultrasonic sensors and a deflection angle parallel to the level ground are arranged, so that a sum of areas of blind zones at the four corners of the machine is minimized.

In this embodiment, the ultrasonic sensors S1 and S14 and the ultrasonic sensors S7 and S8 are symmetrically arranged relative to a central axis parallel to the level ground, and a mounting distance between the ultrasonic sensors S1 and S14 and a distance between the ultrasonic sensors S7 and S8 are set to approximately 260 mm. The ultrasonic sensors S3, S4, and S5 and the ultrasonic sensors S10, S11, and S12 on two sides of the machine are equally spaced at a spacing distance of approximately 470 mm, that is, a mounting distance between every two adjacent ultrasonic sensors of S3, S4, and S5 is approximately 470 mm, and a mounting distance between every two adjacent ultrasonic sensors of S10, S11, and S12 is approximately 470 mm. Mounting distances between ultrasonic sensors S2 and S1, between S13 and S14, between S6 and S7, and between S9 and S8 that are located at the four corners are all approximately 130 mm.

In addition, a deflection angle of the ultrasonic sensors S1, S10, S11, S3, S4, S5, S7, S8, S12, and S14 is 0 degrees, that is, the ultrasonic sensors are not deflected. The ultrasonic sensors S7 and S8 located at the two corners of the rear end of the machine are each deflected outward by 12.5 degrees (i.e. 55 deg-85 deg/2). The ultrasonic sensors S1 and S14 located at the front end of the machine are each deflected outward by 7.5 degrees (i.e. 50 deg-85 deg/2). In this way, areas of blind areas of S1 and S2 are minimized, the sum of areas of blind zones at the four corners of the machine is also minimized. In addition, and the sum of areas of blind zones of adjacent ultrasonic sensors is minimized. FIG. 1 schematically shows one blind zone at the front end of the machine, two blind zones on lateral sides, and two blind zones at corners, which are all represented by circles.

Further, the ultrasonic sensors, especially the ultrasonic sensors arranged at the front end of the machine need to be mounted upward by an inclination angle, to avoid the influence of the grass below the preset grass height and the other components of the machine on detection by the ultrasonic sensors.

It is to be noted that, for brevity of description, the inclination angle is not shown in FIG. 1 to FIG. 4.

In the automatic lawn mower provided in this embodiment, a plurality of ultrasonic sensors are circumferentially arranged inside the housing of the machine, to achieve 360-degree detection by the machine on an obstacle having a height of 0.81 m at a distance of 0.8 m from the machine. In addition, during forward motion of the machine, if there are people or animals on left and right sides of the machine, the ultrasonic sensors on two sides of the body can sense and judge in advance to avoid an obstacle, to further avoid injury during turning, thereby expanding the detection range of the machine, and improving safety of the machine.

Further, the automatic lawn mower further includes a lidar, mounted on the housing and configured to detect an obstacle in the direction of forward motion of the machine.

The lidar and the ultrasonic sensors are used in combination. In this way, when one fails, the other one can still perform a detection function, thereby improving safety of the machine.

Further, in consideration of both cutting efficiency and safety of the machine, a detection distance of the lidar is not less than a sum of the braking distance and a safety distance. The safety distance is a distance between an obstacle and an edge of a cutter head.

It is considered that the lidar has a detection blind zone (referred to as a lidar blind zone for short) during mounting in some embodiments. Further, the detection blind zone of the lidar is close to a detection distance of the ultrasonic sensors. Alternatively, detection ranges of the ultrasonic sensors arranged in a direction of forward motion of the housing at least partially cover the detection blind zone of the lidar. For example, when the machine is started, the ultrasonic sensors complement the lidar blind zone.

Further, the lidar is mounted above the edge of the cutter head of the machine.

Further, a mounting height of the lidar is a minimum of 0.25 m and a maximum of 0.68 m. The mounting height is a height between the lidar and the level ground. In some embodiments, the mounting height is 0.58 m.

Furthermore, the mounting height of the lidar is greater than or equal to 0.40 m and less than or equal to 0.65 m.

Further, a mounting angle of the lidar is set to a minimum of 7.3 degrees and a maximum of 20.8 degrees. The mounting angle of the lidar is in a direction perpendicular to the ground and is an included angle between an axis of the lidar and a horizontal line.

Furthermore, the mounting angle of the lidar is greater than or equal to 13.3 degrees and less than or equal to 17.3 degrees.

Further, a range of the lidar approximately ranges from 2 m to 2.2 m.

In a specific embodiment, the mounting height of the lidar is set to 0.6 m, the lidar is inclined downward, and the mounting angle of the lidar is set to 15.3 degrees.

For any selected mounting height, the mounting angle of the lidar is configured as follows:
A child is detected at a distance not less than 1.3 m;
the range of the lidar is not exceeded when the child is detected, where the range is approximately in a range of 2 m to 2.2 m and is related to the selected lidar; and
to ensure judgment reliability during detection, lidar echoes of at least two points need to be met, and a blind zone of lidar detection needs to be small and within the range of the lidar.

In addition, to meet a safety requirement on non-contact collision, the mounting angle of the lidar is configured as follows:
A detection rod is detected at a distance not less than 0.8 m, where a height of the detection rod is 14.5 cm;
the range of the lidar is not exceeded when the detection rod is detected; and
to ensure judgment reliability during detection, lidar echoes of at least two points need to be met, and a blind zone of lidar detection needs to be small and within a range with a length of 2 m.

For ease of understanding, another automatic lawn mower provided in an embodiment of the present disclosure is briefly described below with reference to FIG. 5.

As shown in FIG. 5, the automatic lawn mower includes a housing 600 and walking wheels 100. The automatic lawn mower autonomously performs a lawn mowing operation on a lawn having a grass height of about 19 cm. The automatic lawn mower includes ultrasonic sensors 300 circumferentially arranged around the housing of the machine. The ultrasonic sensors are arranged at a height of approximately 30 cm, to achieve omnidirectional detection on an obstacle having a specific height at a specific distance in a 360-degree range. In addition, the automatic lawn mower further includes a lidar 400 arranged at a front end of the housing for detecting an obstacle in a direction of forward motion of the machine.

Specifically, the lidar has a range of approximately 2.2 m and a height of approximately 60 cm. The lidar is mounted obliquely downward with a mounting inclination angle of about 15.3 degrees. The lidar can detect a child at a detection distance of 1.5 m. In addition, to meet the safety requirement on non-contact collision, a detection rod 500 having a diameter of 2.5 cm and a height of 14.5 cm can be detected at a detection distance of 2.19 m.

Further, the detection blind zone of the lidar is close to a detection distance of the ultrasonic sensors. In other words, the detection ranges of the ultrasonic sensors at the front end of the machine cover the detection blind zone of the lidar, to avoid the risk brought by the lidar blind zone when the machine is started.

In the automatic lawn mower provided in this embodiment, the lidar and the ultrasonic sensors are arranged to achieve dual-channel detection on an obstacle. In this way, when one of the lidar or the ultrasonic sensor fails, the other one can still perform detection. The lidar has a longer detection distance, so that the machine can prepare in advance when detecting living things, to better avoid the living things. The ultrasonic sensors can complement the blind zone of the lidar, and the ultrasonic sensors and the lidar cooperate and act together. This not only expands a range of obstacle detection, but also improves safety and robustness of the machine.

Further, the automatic lawn mower further includes a depth camera, mounted on the housing and configured to capture an image in the direction of forward motion of the machine.

Furthermore, the depth camera is further configured to identify an obstacle in the image. In other words, when there is an obstacle in the image, a type of the obstacle is determined.

The obstacle is a static or dynamic object in some embodiments. The type of the obstacle includes but is not limited to an inanimate object such as a stone or a tree, and an animate object such as an animal or a person.

The depth camera relies on visual artificial intelligence (AI) to identify an obstacle. In an implementation, the depth camera identifies an obstacle based on a supervised deep learning algorithm, for example, identifies a type of the obstacle based on a pre-trained convolutional neural network mode. It is to be understood that, the depth camera alternatively performs identification on an obstacle based on another machine learning or deep learning algorithm in some other embodiments. This is not specifically limited in this embodiment.

Further, when the depth camera is configured at a first distance from the front end of the machine, the depth camera needs to have a field of view covering at least an obstacle having a height of a first height.

The first distance is set according to the braking distance of the machine in some embodiments, to prevent the machine from colliding with the obstacle during forward motion.

Further, the depth camera is further configured to identify at a second distance from the front end of the machine, where the field of view of the depth camera covers at least an obstacle having a height of a second height. The second distance is greater than the first distance.

For example, the first distance is set to 0.8 m in some embodiments, and the first height is any value in a range of greater than or equal to 0.8 m and less than or equal to 1.1 m; and the second distance is set to 2.5 m in some embodiments, and the second height range is any value in a range of greater than or equal to 1.54 m and less than or equal to 1.9 m.

In this embodiment, during mounting, the depth camera needs to be enabled to cover an obstacle having a height B at a position A at the front end of the machine, that is, the depth camera can view a full picture of the obstacle having the height B.

Specifically, to avoid injury to children, the depth camera is configured to identify a child having a height in a range of 0.8 m to 1.1 m at a distance of 0.8 m from the front end of the machine.

To identify an adult in the distance, a depth machine is further configured to identify an adult having a height in a range of 1.54 m to 1.9 m at a distance of 2.5 m from the front end of the body.

It is considered that the depth camera has a detection blind zone (referred to as a visual blind zone for short) during arrangement in some embodiments. Further, the ultrasonic sensors are arranged on the machine. In this case, detection ranges of ultrasonic sensors arranged in the direction of forward motion of the housing at least partially cover the detection blind zone of the depth camera, to reduce harm caused by the visual blind zone, thereby improving safety of the machine.

It is considered that the camera becomes "blind" and cannot identify an obstacle when the camera works in a strong light environment. Further, the lidar is also mounted on the machine in some embodiments. In this case, the lidar is configured to assist the depth camera in overcoming strong light in some embodiments.

In addition, dust is accumulated on a surface of the lidar during lawn mowing, affecting the detection distance. Therefore, the camera/ultrasonic sensors can be used to prevent dust accumulation that occurs on the lidar and affects the detection distance and causes the safety risk, to further improve safety of the machine.

Further, a vertical viewing angle of the depth camera is set to be in a range of 50 degrees to 65 degrees, and a horizontal viewing angle is set to be in a range of 80 degrees to 95 degrees. The vertical viewing angle is an included angle between a field of vision (also referred to as a field of view) and a direction perpendicular to the level ground. The horizontal viewing angle is an included angle between the field of vision and a direction parallel to the level ground.

Further, the mounting height of the depth camera is in a range of 0.5 m to 0.7 m, that is, a height between the depth camera and the level ground is in a range of 0.5 m to 0.7 m. In some embodiments, the mounting height is 0.65 m.

Further, the depth camera is arranged toward the ground, and a mounting angle of the depth camera is inclined by 12 degrees to 25 degrees relative to the horizontal line in a vertical direction. The mounting angle is an included angle between an axis of the camera and the horizontal line. In other words, the depth camera is inclined downward by an angle in a range of 12 degrees to 25 degrees.

Further, the depth camera is mounted in-line in the housing, to avoid damage from impact.

In this embodiment, the depth camera has a mounting height of 0.7 m. The depth camera is mounted on the top of the housing of the machine and is arranged downward with a mounting angle of 12 degrees.

Further, the depth camera is a monocular camera, a binocular camera, or a trinocular stereo camera in some embodiments.

In an optional implementation, the depth camera is a trinocular stereo camera, to achieve stereo identification on an obstacle.

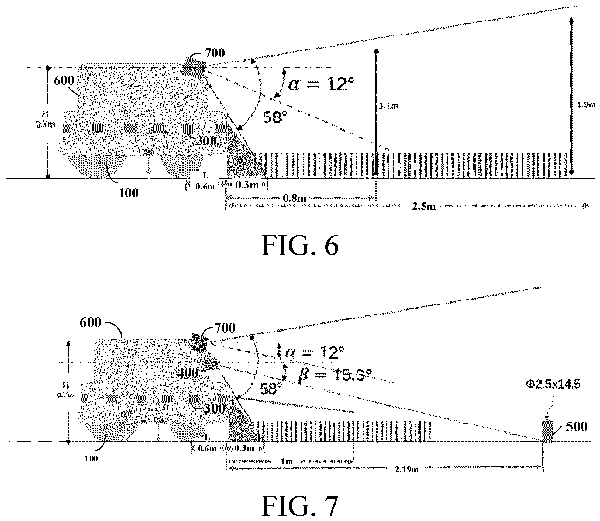

FIG. 6 is a schematic diagram of another automatic lawn mower according to still another embodiment of the present disclosure. The automatic lawn mower includes a housing 600 and walking wheels 100. The automatic lawn mower autonomously performs a lawn mowing operation on a lawn having a grass height of about 19 cm. The automatic lawn mower includes ultrasonic sensors 300 circumferentially arranged around the housing of the machine. The ultrasonic sensors are arranged at a height of approximately 30 cm, to achieve omnidirectional detection on an obstacle having a specific height at a specific distance in a 360-degree range. In addition to the ultrasonic sensors mentioned in the foregoing embodiments, the automatic lawn mower further includes a depth camera 700, arranged on the housing and configured to capture an image in a direction of forward motion of the machine, and determine a type of an obstacle in the image through image processing and recognition.

Specifically, as shown in the figure, a height H between the depth camera and the ground is 0.7 m, and the depth camera is mounted in-line to the top of the housing of the machine. A vertical viewing angle of the depth camera is set to 58 degrees, and a horizontal viewing angle is set to 87 degrees (not shown). The depth camera is inclined downward with a mounting inclination angle α of 12 degrees. The depth camera can detect a child having a height of approximately 1.1 m at a distance of 0.8 m from the front end of the machine. In addition, the depth machine can alternatively identify an adult having a height of approximately 1.9 m at a distance of 2.5 m from the front end of the body.

As can be seen from FIG. 6, the depth camera has a detection blind zone (shown by a mesh triangle) with a length of 0.3 m. The ultrasonic sensors arranged at the front end of the machine substantially cover the detection blind zone of the depth camera, to reduce the operation risk of the machine caused by the blind zone of the camera when the machine is started, thereby improving safety of the machine.

The automatic lawn mower provided in this embodiment includes a depth camera and ultrasonic sensors. The depth camera can detect an obstacle at a farther distance and identify a type of the obstacle. This greatly expands a detecting range and improves precision of the machine. The ultrasonic sensors detect a nearby obstacle in a 360-degree range. This also complements a detection blind zone where the machine starts self-check, and improves safety performance of the machine.

Refer to FIG. 7. An embodiment of the present disclosure further provides an automatic lawn mower. The automatic lawn mower includes a housing 600 and walking wheels 100. The automatic lawn mower autonomously performs a lawn mowing operation on a lawn having a grass height of about 19 cm. The automatic lawn mower includes ultrasonic sensors 300 circumferentially arranged around the housing of the machine, and a lidar 400 and a depth camera 700 that are mounted on the housing. The ultrasonic sensors 300 are configured to perform omnidirectional detection on an obstacle having a specific height at a specific distance in a 360-degree range. The lidar 400 is configured to detect an obstacle in a direction of forward motion of the machine. The depth camera 700 is configured to capture an image in the direction of forward motion of the machine, and identify an obstacle in the image. A mounting height of the depth camera is greater than a mounting height of the lidar, and the mounting height of the lidar is greater than the mounting height of the depth camera.

Specifically, a height between the ultrasonic sensors and the ground is approximately 0.3 m. The mounting height of the lidar is approximately 0.6 m, and the mounting height H of the depth camera is approximately 0.7 m. The ultrasonic sensors at the front end of the machine can detect an obstacle having a height of approximately 0.27 m at a distance of 1 m. The lidar is mounted inclined downward with a mounting inclination angle β of about 15.3 degrees, and can detect a detection rod 500 having a diameter of 2.5 cm and a height of 14.5 cm at a detection distance of 2.19 m. A vertical viewing angle of the depth camera is set to 58 degrees, and a horizontal viewing angle is set to 87 degrees (not shown). The depth camera is inclined downward with a mounting inclination angle α of 12 degrees. Both the depth camera and the lidar have a detection blind zone (shown by a mesh triangle) with a length of 0.3 m. The ultrasonic sensors arranged at the front end of the machine can at least cover the detection blind zone with the length of 0.3 m, to reduce the risk of machine operation caused by the blind zone of the camera when the machine is started, thereby improving safety of the machine.

The ultrasonic sensors, the lidar, and the depth camera are sequentially arranged, from bottom to top, at the front end of the machine of the automatic lawn mower provided in this embodiment, and the ultrasonic sensors are circumferentially arranged around the machine. Such arrangement achieves detection on an obstacle in the 360-degree range, and achieve detection on obstacles at different distances in the direction of forward motion. The lidar is configured to assist the depth camera in overcoming strong light in some embodiments. The camera and/or ultrasonic sensors prevent dust accumulation that occurs on the lidar and affects the detection distance and causes the safety risk. A plurality of ultrasonic sensors are used as a final barrier to protect safety of the machine even if the camera/lidar fails or the machine suddenly brakes. In addition, the ultrasonic sensors can complement the blind zone of the camera and the lidar when the machine is started. This can effectively cope with the risk encountered during machine start-up and traveling, so that the automatic lawn mower identifies an obstacle and reacts without colliding with the obstacle, to be particularly beneficial for user safety.

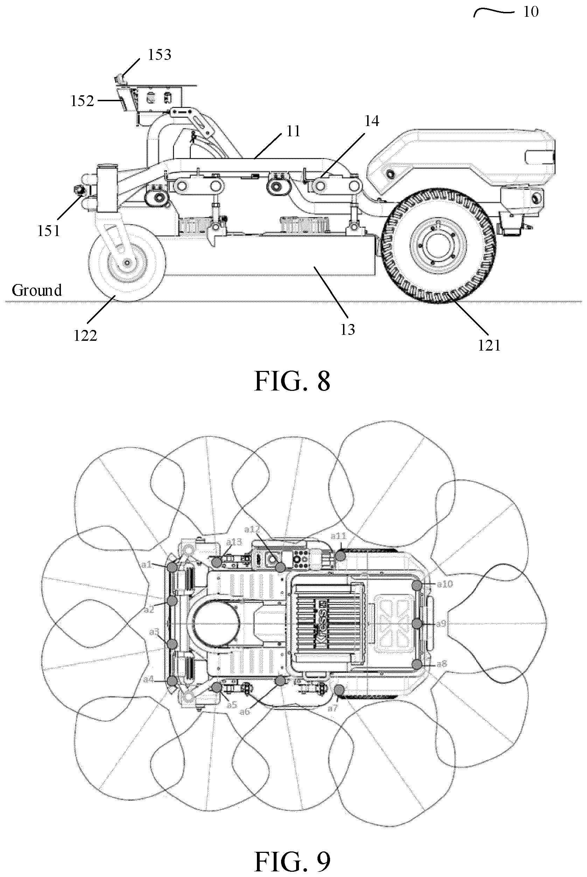

As shown in FIG. 8, another automatic lawn mower 10 is provided in this embodiment of the present disclosure. The automatic lawn mower 10 includes a frame body 11, a movement module 12, a cutting module 13, a controller 14, and a plurality of sensors.

The frame body 11 is supported on the ground by the walking wheels, including, but not limited to, a frame supported by the walking wheels, and also including a support member for the sensors, and the like, for example, a support platform for the sensors.

The movement module 12 is arranged on the frame body 11 and is configured to drive the automatic lawn mower to move, for example, drive the automatic lawn mower to walk in a working region. Specifically, the movement module 12 includes walking wheels and a drive motor that drives the walking wheels to walk, and an output end of the drive motor is connected to the walking wheels. Each walking wheel includes a first walking module 121 and a second walking module 122.

The cutting module 13 is arranged on the frame body 11 and is configured to perform a lawn mowing task in the working region, for example, cut grass in the working region. Specifically, the cutting module 13 includes at least one cutter head and a cutting motor that drives the cutter head to rotate. At least one blade is arranged on each cutter head. The cutter head is driven by the cutting motor to rotate, to drive the blade to cut grass.

The controller 14 is electrically connected to the movement module 12 and the cutting module 13, and is configured to control the movement module 12 to drive the automatic lawn mower to move, and control the cutting module 13 to perform a cutting task.

The plurality of sensors are configured to detect an obstacle in an environment.

In this embodiment, the plurality of sensors include first sensors 151 and a second sensor 152.

In this embodiment, there are a plurality of first sensors 151, arranged around the frame body 11 in a manner in which a detection direction thereof is inclined upward by a first preset angle relative to a horizontal reference plane; and the second sensor is arranged in a manner in which a detection direction thereof is toward a front end of the frame body 11 and is inclined downward by a second preset angle relative to the horizontal reference plane, where poses of the first sensors and the second sensor are combined, so that a sum of detection ranges of the plurality of sensors covers all angles of a detection range in a direction parallel to the horizontal reference plane. The detection direction represents an axis of the sensor. The horizontal reference plane represents the ground on which the lawn mower is currently located. The pose includes position information and attitude information in some embodiments. The position information includes at least a mounting position on the lawn mower. The attitude information includes at least a mounting angle relative to the horizontal reference plane. Each sensor corresponds to a detection range. The detection range is a range of a field of view in which the sensor can detect an obstacle in some embodiments. Full angular coverage in the direction parallel to the horizontal reference plane is any direction in the direction parallel to the horizontal reference plane in a 360-degree range with the body as a center of a circle.

In this embodiment, the first sensors 151 are ultrasonic sensors in some embodiments. The first preset angle is in a range of 29° to 35° in some embodiments. A quantity of ultrasonic sensors is related to a size of the machine. Therefore, the quantity of ultrasonic sensors mounted is determined according to the size of the machine in some embodiments. In some embodiments, in this embodiment, there are 13 ultrasonic sensors. Based on different structures of the lawn mower, mounting heights and/or mounting angles of sensors circumferentially arranged around the lawn mower are the same or different in some embodiments. This is not limited in the present disclosure, and details can be set according to an actual scenario.

In this embodiment, the first preset angle can be appropriately adjusted according to differences in machine structures, usage scenarios, and the like. For example, in some implementation scenarios, the first sensor 151 are ultrasonic sensors, and corresponding first preset angles are different based on requirements on usage scenarios and positions at which the first sensors are mounted on the frame body 110. Specifically, for example, the requirements on the usage scenarios are met as follows: (1) a model of a child having a height of 81 cm in grass with a height of 19 cm at a detection distance of not less than 0.8 meters (m) can be identified in 360-degree surround view; and (2) grass below 19 cm cannot be mistakenly identified as an obstacle, a first preset angle corresponding to ultrasonic sensors at the front end of the frame body 11 is 33°, a first preset angle corresponding to ultrasonic sensors at the rear end of the frame body 11 is 35°, a first preset angle corresponding to ultrasonic sensors at front ends of lateral sides of the frame body 110 is 34°, a first preset angle corresponding to ultrasonic sensors at rear ends of the lateral sides of the frame body 11 is 29°, and a first preset angle corresponding to ultrasonic sensors at the middle of the lateral sides of the frame body 11 is 31° in some embodiments. Certainly, the foregoing descriptions are merely illustrative only and do not constitute a limitation on other embodiments of this application.

In this embodiment, the second sensor 152 is a lidar in some embodiments. In some embodiments, the second sensor is a solid-state lidar in some embodiments. The second preset angle is in a range of -3° to 15°. In some embodiments, the second preset angle is 15°.

In this embodiment, the second preset angle can be appropriately adjusted according to differences in machine structures, usage scenarios, and the like. For example, in some embodiments, the second sensor 152 is a solid-state lidar that is correspondingly mounted with a downward inclination angle of 15° based on requirements on usage scenarios of the second sensor. The requirements on the usage scenarios include the following: (1) A full picture of an obstacle having a height of B can be viewed at a distance of A; (2) a model of a child having a height of 350 mm lying on grass with a height of 19 cm can be viewed at a distance of 1.3 m; (3) a detection rod with a height of 14.5 cm can be viewed at a distance of 0.8 m; (4) a length of a blind zone is less than 800 mm and is as short as possible; (5) the solid-state lidar optical axis heads up or down as much as possible to reduce the influence of sunlight incidence; and (6) the body of the machine cannot be scanned. In addition, the requirements on the usage scenarios further include the following in some embodiments: (1) A length of a blind zone is less than 800 mm and is as short as possible; and (2) a height of an object that can be viewed at a distance of 0.8 m is not less than a height of the automatic lawn mower. Certainly, the foregoing descriptions are merely illustrative only and do not constitute a limitation on other embodiments of this application. It is to be noted that, the second preset angle is an angle of downward inclination of the lidar inside of which is not inclined (that is, an axis of the lidar is parallel to the horizontal reference plane). Because in some implementation scenarios, the inside of the lidar has been inclined by an angle (that is, the axis of the lidar has been inclined downward relative to the horizontal reference plane), and in this case, a downward inclination angle can be adjusted according to actual requirements. Specifically, for example, the inside of the lidar has been inclined downward by 15°, and in this case, the lidar can be inclined downward by 0°

In some embodiments, mounting angles of the sensors are different, and correspondingly, detection ranges of the sensors are the same or different.

In some embodiments, the mounting height and/or the mounting angle can be adjusted, so that the sensors meet the requirements on the usage scenarios.

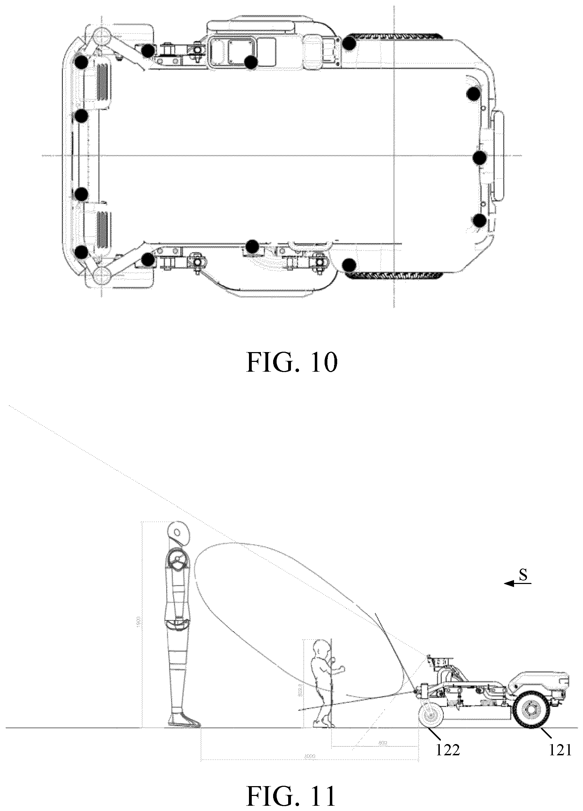

In this embodiment, poses of the first sensors 151 are combined in all directions around a body of the automatic lawn mower, so that detection ranges of adjacent first sensors 151 at least partially overlap. As shown in FIG. 9 and FIG. 10, the automatic lawn mower includes 13 ultrasonic sensors a1, a2, a3, a4, a5, a6, a7, a8, a9, a10, a11, a12, and a13 arranged around the frame body 11. Detection ranges of adjacent ultrasonic sensors at least partially overlap. Specifically, the ultrasonic sensors a1, a2, a3, and a4 are arranged at the front end of the frame body 11 with an upward inclination angle of 33° relative to the horizontal reference plane, the ultrasonic sensors a8, a9, and a10 are arranged at the rear end of the frame body 11 with an upward inclination angle of 35° relative to the horizontal reference plane, the ultrasonic sensors a5 and a13 are arranged at the front ends of the lateral sides of the frame body 11 with an upward inclination angle of 34° relative to the horizontal reference plane, the ultrasonic sensors a6 and a12 are arranged at the middle of the lateral sides of the frame body 11 with an upward inclination angle of 31° relative to the horizontal reference plane, and the ultrasonic sensors a7 and a11 are arranged at the rear ends of the lateral sides of the frame body 11 with an upward inclination angle of 29° relative to the horizontal reference plane. In this way, detection ranges of adjacent first sensors at least partially overlap in all directions around the body of the automatic lawn mower.

In this embodiment, the first sensors on two sides of the body can sense and judge in advance to avoid an obstacle, to further avoid injury during turning, thereby achieving 360-degree detection on an obstacle around the body through the first sensors circumferentially arranged.

In this embodiment, the poses of the first sensors 151 and the second sensor 152 are combined in a moving direction of the automatic lawn mower, so that detection ranges of the first sensors 151 at least partially overlap a detection range of the second sensor 152.

In this embodiment, the poses of the first sensors 151 and the second sensor 152 are combined, so that detection ranges of the first sensors 151 partially overlap a detection range of the second sensor 152 in a moving direction of the automatic lawn mower. In this way, a detection blind zone can be avoided, to ensure that obstacles at different distances can be detected, thereby improving safety and robustness of the machine. In addition, the first sensors and the second sensor are arranged to achieve dual-channel detection on an obstacle, so that when one of the first sensor or the second sensor fails, the other one can still perform detection.

In this embodiment, the poses of the first sensors 151 and the second sensor 152 are combined in a moving direction of the automatic lawn mower, so that detection ranges of the first sensors 151 at least partially do not overlap a detection range of the second sensor 152. In this way, when the detection ranges are at least partially non-overlapping, a wider detection range of the sensors is achieved.

As shown in FIG. 11, a direction from the first walking module 121 to the second walking module 122 is used as a moving direction S of the automatic lawn mower. For example, the first sensors 151 are ultrasonic sensors, and the second sensor 152 is a lidar. In the moving direction S, to meet requirements on the usage scenario, the ultrasonic sensors are arranged at the front end of the frame body with an upward inclination angle of 33°, and the lidar (inside of which has been inclined downward by 15°) is arranged at the front end of the frame body with a downward inclination angle of 0°. In this way, poses of the ultrasonic sensors and the lidar are combined, so that an overlapping region and a non-overlapping region exist between detection ranges of the ultrasonic sensors and a detection range of the lidar. The overlapping region can avoid the detection blind zone, to ensure that obstacles at different distances can be detected, thereby improving safety and robustness of the machine. The non-overlapping region makes the detection ranges of the sensors wider.

In this embodiment, in a first detection range of the plurality of sensors that is obtained in the moving direction of the automatic lawn mower based on the combination of the poses of the first sensors 151 and the pose of the second sensor 152, a detection distance of the first sensors 151 in the direction parallel to the horizontal reference plane is less than a detection distance of the second sensor 152 in the direction parallel to the horizontal reference plane, and a detection height of the first sensors 151 in a direction perpendicular to the horizontal reference plane is less than a detection height of the second sensor 152 in the direction perpendicular to the horizontal reference plane. The first detection range is a detection range obtained by overlapping the detection ranges of the first sensors 151 and the second sensor 152 in the moving direction.

Specifically, in the first detection range of the plurality of sensors that is obtained in the moving direction of the automatic lawn mower based on the combination of the poses of the first sensors 151 and the pose of the second sensor 152, the detection distance of the first sensors 151 in the direction parallel to the horizontal reference plane at least includes a range of 0.2 m to 0.8 m, and the detection distance of the second sensor 152 in the direction parallel to the horizontal reference plane at least includes a range of 0.4 m to 6 m. In this way, a nearby obstacle can be detected through the first sensors 151, and an obstacle in the distance can be detected through the second sensor 152.

In some embodiments, to ensure safety, the detection distance of the first sensors 151 in the direction parallel to the horizontal reference plane is greater than or equal to a braking distance of the machine. The braking distance of the machine is a distance at which the machine brakes to a complete stop during travel in some embodiments. The braking distance is related to a travel speed of the machine. Further, the braking distance is determined based on the travel speed of the machine and braking acceleration in some embodiments. In some embodiments, for example, the travel speed is 2 m/s. In this case, the braking distance of the machine is approximately 0.8 m. Certainly, in some embodiments, the detection distance of the first sensors 151 is greater than or equal to a safety distance. The safety distance is a distance between an obstacle and an edge of the cutter head in some embodiments. For example, the safety distance is usually set based on a distance at which a person can reach the edge of the cutter head or the blade when reaching out. The safety distance is usually set to 0.5 m.

In some embodiments, to improve cutting efficiency and safety of the machine, the detection distance of the second sensor 152 in the direction parallel to the horizontal reference plane is not less than a sum of the braking distance and the safety distance.

In this embodiment, because the second sensor has a longer detection distance, the lawn mower can prepare in advance when detecting an obstacle, to better avoid the obstacle. Since the first sensors have a shorter detection distance, the first sensors can be used to complement the detection blind zone of the second sensor. In this way, the first sensors and the second sensor cooperate and act together. This can ensure that obstacles at different distances can be detected, expands a range of obstacle detection, and improve safety and robustness of the machine.

In this embodiment, in the first detection range, the detection height of the first sensors 151 in the direction perpendicular to the horizontal reference plane is less than or equal to the detection height of the second sensor 152 in the direction perpendicular to the horizontal reference plane when the first sensors and the second sensor are at the same distance from the front end of the frame body.

Specifically, in the first detection range, when the first sensors and the second sensor are at a distance of 0.8 m from the front end of the frame body, the detection height of the first sensors 151 in the direction perpendicular to the horizontal reference plane is not less than 0.81 m, and the detection height of the second sensor 152 in the direction perpendicular to the horizontal reference plane is not less than 0.93 m. Certainly, the foregoing descriptions are at least illustrative and do not constitute a limitation on other embodiments of this application.

In this embodiment, a low obstacle can be detected through the first sensors, and a high obstacle can be detected through the second sensor, to ensure that obstacles with different heights can be detected.

In this embodiment, in the first detection range, the second sensor 152 can detect an obstacle having a height of not less than 0.145 m at a distance of 0.8 m from the front end of the frame body 11. The second sensor 152 is configured to detect an obstacle having a height of not less than 0.35 m at a distance of 1.3 m from the front end of the frame body 11. Alternatively, the second sensor 152 is configured to detect an obstacle having a height of not less than 1.5 m at a distance of 2.5 m from the front end of the frame body. Specifically, for example, in the first detection range, the second sensor 152 can detect a detection rod having a height of 0.145 m at a distance of 0.8 m from the front end of the frame body. In the first detection range, the second sensor 152 can detect that a height of an obstacle at a distance of 0.8 m from the front end of the frame body is not less than a height of the body.

In this embodiment, in the first detection range, the first sensors 151 are configured to detect an obstacle having a height of not less than a first preset value at a distance of 0.8 m from the front end of the frame body 11, and are not configured to detect an obstacle having a height of not greater than a second preset value at a distance of 0.8 m from the front end of the frame body 11. In some implementation scenarios, the first preset value represents a height of a child, and the second preset value represents a grass height, where the second preset value is less than the first preset value. Specifically, for example, in some embodiments, a child has a height of 0.81 m, and grass has a height of 0.19 m.

Specifically, for example, considering that grass has a height when the automatic lawn mower performs lawn mowing in a working region, to prevent grass (where the grass height is usually 0.19 m) from being mistakenly identified as an obstacle or avoid the influence of the grass height on a detection result, the first sensors 151 are arranged on the frame body with an inclination angle of a first preset angle relative to the horizontal reference plane, so that the first sensors can detect an obstacle having a height of 0.81 m at a distance of 0.8 m from the front end of the frame body, but cannot detect grass having a height of 0.19 m at a distance of 0.8 m from the front end of the frame body.

In this embodiment, in a moving direction of the automatic lawn mower, a distance between the front end of the frame body 11 and an intersection between a detection range of the second sensor 152 and the horizontal reference plane is not greater than a detection distance of the first sensors 151 in the direction parallel to the horizontal reference plane. The intersection between the detection range of the second sensor 152 and the horizontal reference plane is a position farthest from the frame body 11 in the detection blind zone of the second sensor 152 in some embodiments. The position farthest from the frame body 11 in the detection blind zone cannot be too close to the frame body 11, if too close, a field of view of the second sensor 152 includes the body, and consequently, an effective field of view of the lawn mower is reduced. The position farthest from the frame body 11 in the detection blind zone cannot be too far from the frame body 11. If too far, because the detection distance of the first sensors 151 is shorter, the first sensors 151 cannot complement the detection blind zone of the second sensor 152, and consequently, safety and robustness of the machine are reduced.

Specifically, for example, considering that the lidar has a detection blind zone (referred to as a lidar blind zone for short) during mounting in some embodiments, to complement the detection blind zone of the lidar by using the ultrasonic sensors, detection ranges of the ultrasonic sensors arranged in the moving direction of the housing at least partially cover the detection blind zone of the lidar. In this way, when the machine is started, the ultrasonic sensors complement the lidar blind zone.

In this embodiment, the distance between the frame body and the position farthest from the frame body in the detection blind zone is not greater than the detection distance of the first sensors. In this way, the first sensors are used to complement a detection blind zone of the second sensor, so that obstacles at different distances can be detected, and safety and robustness of the machine are improved. In addition, the first sensors and the second sensor are arranged to achieve dual-channel detection on an obstacle, so that when one of the first sensor or the second sensor fails, the machine can still perform detection.

In this embodiment, a horizontal distance between the second sensor 152 and the front end of the frame body 11 is greater than a horizontal distance between the first sensors 151 and the front end of the frame body 11. The distance between the sensor and the front end of the frame body 1 is a distance at which the sensor is inwardly contracted relative to the frame body. Specifically, an inward contraction of the first sensors 151 is 0 millimeters (mm), and an inward contraction of the second sensor 152 is 110 ± 10 mm in some embodiments. Certainly, the foregoing descriptions are merely illustrative only and do not constitute a limitation on other embodiments of this application.

In this embodiment, the second sensor is inwardly retracted. In this way, a field of view of the sensors does not include the body, thereby improving the effective field of view of the lawn mower. In addition, damage to the sensors caused by collision can be avoided, thereby reducing costs.

As shown in FIG. 8, in some embodiments, the plurality of sensors further include a third sensor 153, arranged in a manner in which a detection direction thereof is toward the front end of the frame body 11 and is inclined downward by a third preset angle relative to the horizontal reference plane.

In some embodiments, the third sensor 153 is one of a monocular camera, a binocular camera, a depth camera, or the like in some embodiments. The third preset angle is in a range of -4° to 10°. In some embodiments, the third preset angle is 10°.

In some embodiments, the third preset angle can be appropriately adjusted according to differences in machine structures, usage scenarios, and the like. For example, in some embodiments, the third sensor 153 is a monocular camera that is correspondingly mounted with a downward inclination angle of 10° based on requirements on requirements on usage scenarios of the third sensor. The requirements on usage scenarios includes the following in some embodiments. (1) A full picture of an obstacle having a height of B can be viewed at a distance of A; (2) a length of a blind zone is less than 800 mm and is as short as possible; and (3) a viewing angle heads up or down as much as possible to reduce the influence of sunlight incidence; and (4) the body of the machine cannot be captured. Certainly, the foregoing descriptions are merely illustrative only and do not constitute a limitation on other embodiments of this application. It is to be noted that, based on different types of the third sensor, corresponding field of views FOVs are different, and corresponding third preset angles are also different, which are specifically adjusted based on actual scenarios to meet the requirements on usage scenarios.

In some embodiments, in a moving direction of the automatic lawn mower, poses of the first sensors 151, the second sensor 152, and the third sensor 153 are combined, so that detection ranges of the first sensors 151 and the second sensor 152 and/or the third sensor 153 at least partially overlap. In this way, a detection blind zone can be avoided, to ensure that obstacles at different distances can be detected, thereby improving safety and robustness of the machine. In addition, the first sensors and the second sensor are arranged to achieve dual-channel detection on an obstacle, so that when one of the first sensor or the second sensor fails, the other one can still perform detection.

In some embodiments, in a moving direction of the automatic lawn mower, poses of the first sensors 151, the second sensor 152, and the third sensor 153 are combined, so that detection ranges of the first sensors 151 and the second sensor 152 and/or the third sensor 153 at least partially do not overlap. In this way, when the detection ranges are at least partially non-overlapping, a wider detection range of the sensors is achieved.

As shown in FIG. 11, a direction from the first walking module 121 to the second walking module 122 is used as a moving direction S of the automatic lawn mower. For example, the first sensors 151 are ultrasonic sensors, the second sensor 152 is a lidar, and the third sensor 153 is a monocular camera. In the moving direction S, to meet requirements on the usage scenario, the ultrasonic sensors are arranged at the front end of the frame body with an upward inclination angle of 33°, the lidar (inside of which has been inclined downward by 15°) is arranged at the front end of the frame body with a downward inclination angle of 0°, and the monocular camera is arranged at the front end of the frame body with a downward inclination angle of 10°. In this case, poses of the ultrasonic sensors, the lidar, and the monocular camera are combined, so that there are an overlapping region and a non-overlapping region in a new detection range. The overlapping region can avoid the detection blind zone, to ensure that obstacles at different distances can be detected, thereby improving safety and robustness of the machine. The non-overlapping region makes the detection ranges of the sensors wider.

In some embodiments, in a second detection range that is obtained in the moving direction of the automatic lawn mower based on the combination of the poses of the first sensors 151, the pose of the second sensor 152, and the pose of the third sensor 153, a detection distance of the first sensors 151 in the direction parallel to the horizontal reference plane is less than a detection distance of the second sensor 152 and/or a detection distance of the third sensor 153 in the direction parallel to the horizontal reference plane, and a detection height of the first sensors 151 in a direction perpendicular to the horizontal reference plane is less than a detection height of the second sensor 152 and/or a detection height of the third sensor 153 in the direction perpendicular to the horizontal reference plane. The first detection range is a detection range obtained by overlapping the detection ranges of the first sensors 151 and detection ranges of the second sensor 152 and/or the third sensor in the moving direction.

In some embodiments, in the second detection range, the detection height of the second sensor 152 in the direction perpendicular to the horizontal reference plane is less than or equal to the detection height of the third sensor 153 in the direction perpendicular to the horizontal reference plane when the second sensor 152 and the third sensor 153 are at the same distance from the front end of the frame body 11.

In this way, a low obstacle can be detected through the first sensors, a medium high obstacle can be detected through the second sensor, and a high obstacle can be detected through the third sensor, to ensure that obstacles with different heights can be detected.

In some embodiments, in the second detection range, a detection distance of the second sensor 152 in the direction parallel to the horizontal reference plane is similar to a detection distance of the third sensor 152 in the direction parallel to the horizontal reference plane. In this way, a nearby obstacle can be detected through the first sensors, and an obstacle in the distance can be detected through the second sensor and/or the third sensor.

In some embodiments, in the second detection range, the third sensor is configured to detect an obstacle having a height of not less than 1.9 m at a distance of 2 m from the front end of the frame body; and the third sensor is configured to detect an obstacle having a height of not less than 0.81 m at a distance of 0.5 m from the front end of the frame body.

In some embodiments, a horizontal distance between the third sensor 153 and the front end of the frame body 11 is less than a horizontal distance between the second sensor 152 and the front end of the frame body 11. Specifically, an inward contraction of the third sensor 153 is 80 ± 10 millimeters (mm), and an inward contraction of the second sensor 152 is 110 ± 10 mm in some embodiments. Certainly, the foregoing descriptions are merely illustrative only and do not constitute a limitation on other embodiments of this application.

In this embodiment, the third sensor is inwardly retracted. In this way, a field of view of the sensors does not include the body, thereby improving the effective field of view of the lawn mower. In addition, damage to the sensors caused by collision can be avoided, thereby reducing costs.

In some embodiments, in a moving direction of the automatic lawn mower, a distance between the front end of the frame body 11 and an intersection between a detection range of the third sensor 153 and the horizontal reference plane is not greater than a detection distance of the first sensors 151 in the direction parallel to the horizontal reference plane. In this way, the first sensors are used to complement a detection blind zone of the third sensor, so that obstacles at different distances can be detected, and safety and robustness of the machine are improved. In addition, the first sensors and the second sensor and/or the third sensor are arranged to achieve dual-channel detection on an obstacle, so that when one of the first sensor or the second sensor and/or the third sensor fails, the other one can still perform detection.

In some embodiments, the third sensor 153 is configured to identify a type of the obstacle. Specifically, when an obstacle is identified through the first sensors and/or the second sensor, a type of the obstacle can be identified through the third sensor, to help the machine execute a corresponding obstacle avoidance policy based on the type of the obstacle. The obstacle is a static object or a dynamic object in some embodiments. Types of the obstacle include, but are not limited to, a child, an adult, a cat or dog, a hedgehog, a branch, a water pipe, a chair, a lawn light, and the like. Obstacle avoidance strategies corresponding to different types of the obstacle are the same or different.

In some embodiments, a mounting height of the first sensors 151 is less than a mounting height of the second sensor 152, and the mounting height of the second sensor 152 is less than a mounting height of the third sensor 153.

In some embodiments, the automatic lawn mower further includes a protective mechanism for protecting the cutter head, to ensure safety. The protective mechanism is, for example, a protection cover in some embodiments.

In some embodiments, the automatic lawn mower further includes a height adjustment mechanism for adjusting a height of the cutter head. The height adjustment mechanism adjusts the cutter head to different heights, to obtain different grass heights, thereby meeting different requirements on the grass height in different scenarios.

In the embodiments of this specification, a plurality of different types of sensors are arranged on the automatic lawn mower. In this way, poses of the plurality of sensors are combined, so that detection ranges of the sensors complement each other, and the automatic lawn mower is allowed to promptly and accurately identify obstacles in all directions of the body of the automatic lawn mower, thereby avoiding the obstacles and ensuring safety.

The foregoing embodiments merely describe some implementations of the present disclosure and are described in detail, but cannot be construed as a limitation to the patent scope of the present disclosure. It should be noted that a person of ordinary skill in the art may further be make several variations and improvements without departing from the concept of the present disclosure, and these variations and improvements all fall within the protection scope of the present disclosure.

## Claims

1. An automatic lawn mower, comprising:
a frame body;
a movement module, arranged on the frame body;
a cutting module, arranged on the frame body;
a controller, configured to control the movement module to drive movement of the automatic lawn mower, and control the cutting module to perform a cutting task; and
a plurality of sensors, configured to detect an obstacle in an environment, **characterized in that**
the plurality of sensors comprise:
a plurality of first sensors, wherein the first sensors are arranged around the frame body in a manner in which a detection direction is inclined upward by a first preset angle relative to a horizontal reference plane; and
a second sensor, arranged in a manner in which a detection direction is toward a front end of the frame body and is inclined downward by a second preset angle relative to the horizontal reference plane, wherein
combination of the poses of the first sensors and the second sensor, so that a sum of detection ranges of the plurality of sensors covers all angles in a direction parallel to the horizontal reference plane.

2. The automatic lawn mower according to claim 1, **characterized in that** combination of the poses of the first sensors in all directions around a body of the automatic lawn mower, so that detection ranges of adjacent first sensors at least partially overlap; and
the combination of the poses of the first sensors and the second sensor in a moving direction of the automatic lawn mower, so that detection ranges of the first sensors at least partially overlap a detection range of the second sensor.

3. The automatic lawn mower according to claim 1, **characterized in that** combination of the poses of the first sensors and the second sensor in a moving direction of the automatic lawn mower, so that detection ranges of the first sensors at least partially do not overlap a detection range of the second sensor, wherein the detection ranges are at least partially non-overlapping, so that the detection ranges of the sensors are wider.

4. The automatic lawn mower according to claim 3, **characterized in that** in the moving direction of the automatic lawn mower and in a first detection range of the plurality of sensors that is obtained based on the combination of the poses of the first sensors and the second sensor, a detection distances of the first sensors in the direction parallel to the horizontal reference plane is less than a detection distance of the second sensor in the direction parallel to the horizontal reference plane, and a detection height of the first sensors in a direction perpendicular to the horizontal reference plane is less than a detection height of the second sensor in the direction perpendicular to the horizontal reference plane.

5. The automatic lawn mower according to claim 4, **characterized in that** the detection distances of the first sensors in the direction parallel to the horizontal reference plane is at least 0.2 m to 0.8 m, and the detection distance of the second sensor in the direction parallel to the horizontal reference plane is at least 0.4 m to 6 m.

6. The automatic lawn mower according to claim 4, **characterized in that** in the first detection range the detection height of the first sensors in the direction perpendicular to the horizontal reference plane is less than or equal to the detection height of the second sensor in the direction perpendicular to the horizontal reference plane when the first sensors and the second sensor are at the same distance from the front end of the frame body.

7. The automatic lawn mower according to claim 4, **characterized in that** in the first detection range,
the second sensor is configured to detect an obstacle having a height of not less than 0.145 m at a distance of 0.8 m from the front end of the frame body;
the second sensor is configured to detect an obstacle having a height of not less than 0.35 m at a distance of 1.3 m from the front end of the frame body; and
the second sensor is configured to detect an obstacle having a height of not less than 1.5 m at a distance of 2.5 m from the front end of the frame body.

8. The automatic lawn mower according to claim 4, **characterized in that** in the first detection range the first sensors are configured to detect an obstacle having a height of not less than a first preset value at a distance of 0.8 m from the front end of the frame body, and are configured to not detect an obstacle with a height of not greater than a second preset value at a distance of 0.8 m from the front end of the frame body, wherein the second preset value is less than the first preset value.

9. The automatic lawn mower according to claim 1, **characterized in that** in a moving direction of the automatic lawn mower, a distance between the front end of the frame body and an intersection between a detection range of the second sensor and the horizontal reference plane is not greater than a detection distances of the first sensors in the direction parallel to the horizontal reference plane.

10. The automatic lawn mower according to claim 1, **characterized in that** a horizontal distance between the second sensor and the front end of the frame body is greater than a horizontal distance between the first sensors and the front end of the frame body.

11. The automatic lawn mower according to claim 1, **characterized in that** the plurality of sensors further comprise a third sensor, arranged in a manner that a detection direction is toward the front end of the frame body and is inclined downward by a third preset angle relative to the horizontal reference plane.

12. The automatic lawn mower according to claim 11, **characterized in that** in a moving direction of the automatic lawn mower, poses of the first sensors, the second sensor, and the third sensor are combined, so that detection ranges of the first sensors and the second sensor and/or the third sensor at least partially overlap.

13. The automatic lawn mower according to claim 11, **characterized in that** in a moving direction of the automatic lawn mower, poses of the first sensors, the second sensor, and the third sensor are combined, so that detection ranges of the first sensors and the second sensor and/or the third sensor at least partially do not overlap, wherein the detection ranges are at least partially non-overlapping, so that the detection ranges of the sensors are wider.

14. The automatic lawn mower according to claim 13, **characterized in that** in the moving direction of the automatic lawn mower and in a second detection range that is obtained based on the combination of the poses of the first sensors, the second sensor, and the third sensor, a detection distances of the first sensors in the direction parallel to the horizontal reference plane is less than a detection distance of the second sensor and/or a detection distance of the third sensor in the direction parallel to the horizontal reference plane, and a detection height of the first sensors in a direction perpendicular to the horizontal reference plane is less than a detection height of the second sensor and/or a detection height of the third sensor in the direction perpendicular to the horizontal reference plane.

15. The automatic lawn mower according to claim 14, **characterized in that** in the second detection range, the detection height of the second sensor in the direction perpendicular to the horizontal reference plane is less than or equal to the detection height of the third sensor in the direction perpendicular to the horizontal reference plane when the second sensor and the third sensor are at the same distance from the front end of the frame body.

16. The automatic lawn mower according to claim 14, **characterized in that** in the second detection range, the third sensor is configured to detect an obstacle having a height of not less than 1.9 m at a distance of 2 m from the front end of the frame body; and
the third sensor is configured to detect an obstacle having a height of not less than 0.81 m at a distance of 0.5 m from the front end of the frame body.

17. The automatic lawn mower according to claim 11, **characterized in that** a horizontal distance between the third sensor and the front end of the frame body is less than a horizontal distance between the second sensor and the front end of the frame body.

18. The automatic lawn mower according to claim 11, **characterized in that** in a moving direction of the automatic lawn mower, a distance between the front end of the frame body and an intersection between a detection range of the third sensor and the horizontal reference plane is not greater than a detection distances of the first sensors in the direction parallel to the horizontal reference plane.

19. The automatic lawn mower according to claim 11, **characterized in that** the third sensor is configured to identify a type of the obstacle.

20. The automatic lawn mower according to claim 1, **characterized in that** the first preset angle is in a range of 29° to 35°.

21. The automatic lawn mower according to claim 1, **characterized in that** the second preset angle is in a range of-3° to 15°.

22. The automatic lawn mower according to claim 11, **characterized in that** the third preset angle is in a range of -4° to 10°.

23. The automatic lawn mower according to claim 1, **characterized in that** the first sensors are ultrasonic sensors, and the second sensor is a laser radar.

24. The automatic lawn mower according to claim 11, **characterized in that** the third sensor is a monocular camera, a multi-ocular camera, or a depth camera.
